(19) Europäisches Patentamt
European Patent Office
Office européen des brevets

(11) **EP 1 051 311 B1**

## (12) EUROPÄISCHE PATENTSCHRIFT

(45) Veröffentlichungstag und Bekanntmachung des Hinweises auf die Patenterteilung:
**29.03.2006 Patentblatt 2006/13**

(21) Anmeldenummer: **99932461.9**

(22) Anmeldetag: **22.01.1999**

(51) Int Cl.:
***B60R 21/00*** *(2006.01)* ***B60R 21/16*** *(2006.01)*

(86) Internationale Anmeldenummer:
**PCT/EP1999/000407**

(87) Internationale Veröffentlichungsnummer:
**WO 1999/038731 (05.08.1999 Gazette 1999/31)**

(54) **AUSWERTEVERFAHREN FÜR EINEN SITZBELEGUNGSSENSOR**

EVALUATION METHOD FOR A SEAT OCCUPANCY SENSOR

PROCEDE D'EVALUATION POUR UN DETECTEUR D'OCCUPATION DE SIEGE

(84) Benannte Vertragsstaaten:
**DE ES FR GB IT SE**

(30) Priorität: **28.01.1998 LU 90202**

(43) Veröffentlichungstag der Anmeldung:
**15.11.2000 Patentblatt 2000/46**

(73) Patentinhaber: **IEE INTERNATIONAL ELECTRONICS & ENGINEERING S.A.**
**6468 Echternach (LU)**

(72) Erfinder:
• **Billen, Karl**
**54675 Körperich (DE)**

• **Federspiel, Laurent**
**7392 Asselscheuer (LU)**
• **Theiss, Edgard**
**4720 Kelmis (BE)**

(74) Vertreter: **Beissel, Jean et al**
**Office Ernest T. Freylinger S.A.,**
**234, route d'Arlon,**
**B.P. 48**
**8001 Strassen (LU)**

(56) Entgegenhaltungen:
**DE-A- 19 625 730      FR-A- 2 744 548**
**US-A- 5 474 327**

**Beschreibung**

Die vorliegende Erfindung betrifft ein Auswerteverfahren für einen Sitzbelegungssensor eines Fahrzeugsitzes zur Klassifizierung einer auf dem Fahrzeugsitz sitzenden Person oder eines auf dem Fahrzeugsitz aufliegenden Gegenstandes.

Das Verletzungsrisiko von Fahrzeuginsassen bei einem Unfall konnte in den vergangenen Jahren durch den Einsatz von aktiven Rückhaltesystemen wie z.B. Airbags deutlich verringert werden. Die dabei eingesetzten Airbagsysteme weisen lediglich einen einzigen Auslösemodus dar und stellen somit allesamt eine Kompromißlösung dar, da sie unabhängig von der Statur eines Insassen bei einem Unfall gezündet wurden.

Um die Sicherheit der Fahrzeugpassagiere weiter zu erhöhen, sollen künftige Airbag-Generation mehrere unterschiedliche Auslösemodi aufweisen, d.h. der Airbag soll bei einem Unfall je nach Statur des Passagiers, eventuell mit unterschiedlichen Geschwindigkeiten, auf unterschiedliche Volumen aufgeblasen werden. Vorgesehen sind dabei beispielsweise drei diskrete Auslösemodi, die an unterschiedliche Klassen von Passagieren angepaßt werden.

Um ein derart gezieltes Ansteuern des Airbags zu ermöglichen, muß die Statur des Passagiers ermittelt und in eine bestimmte Klasse eingeordnet werden, wonach der Airbag in einen an diese Klasse angepaßten Auslösemodus geschaltet wird. Die Klassifizierung der Statur des Passagiers kann beispielsweise über eine Ermittlung des Belegungsprofils auf dem Fahrzeugsitz erfolgen, wobei die Sitzbelegung in verschiedenen Klassen eingeteilt wird.

Um eine Klassifizierung der Sitzbelegung durchführen zu können, wird der Fahrzeugsitz mit einem Sitzbelegungssensor ausgestattet, der mehrere über die Fläche des Fahrzeugsitzes verteilte Sensorelemente aufweist. Solche Sitzbelegungssensoren werden in der Airbagsteuerung beispielsweise auch eingesetzt, um den Airbag auf der Beifahrerseite abzuschalten, wenn der entsprechende Sitz nicht belegt ist.

Ist der Fahrzeugsitz belegt, so werden die Sensorelemente zur Klassifizierung der Sitzbelegung vorzugsweise einzeln ausgewertet, wobei für jedes Sensorelement ein Meßwert ermittelt wird, der für den momentanen Schaltzustand des jeweiligen Sensorelements kennzeichnend ist. Anhand dieser Meßwerte kann dann ein für eine bestimmte Klasse von Passagieren oder Objekten charakteristischer Sitzbelegungsparameter errechnet werden. Ein derartiges Verfahren ist beispielsweise aus der DE-A-196 25 730 oder der US-A-5,474,327 bekannt.

Bei ruhenden Objekten, die auf dem Fahrzeugsitz eine optimale Position eingenommen haben, funktioniert ein derartiges Verfahren nahezu optimal. Die Schwierigkeit bei einer effektiven Charakterisierung der Sitzbelegung durch eine Person liegt darin, daß ein Passagier auf Dauer nicht ruhig sitzt und daher die Belegung des Fahrzeugsitzes nicht optimal ist, sondern ständig ändert. Eine periodische Berechnung von Sitzbelegungsparametern führt aus diesem Grund zu stark schwankenden Ergebnissen, so daß eine wirksame Klassifizierung der Sitzbelegung nicht möglich ist.

Um zumindest kurzfristige Änderungen der Sitzposition aus der Berechnung auszufiltern, besteht die Möglichkeit, die Klassifizierung der Sitzbelegung anhand gemittelter Sitzbelegungsparameter durchzuführen. Hierzu speichert man den jeweils neu errechneten Wert des Sitzbelegungsparameters in einen Pufferspeicher, in dem in den vorherigen Berechnungsdurchläufen eine bestimmte Anzahl von Parameterwerten gespeichert wurden. Durch eine Mittelung der gespeicherten Parameterwerte gelangt man dann zu einem Durchschnittswert für die Sitzbelegung während der letzten Meßdurchläufe.

Nimmt der Passagier dagegen über einen längeren Zeitraum eine von der optimalen Sitzposition verschiedene Haltung ein, verschlechtert sich unweigerlich die anhand des über mehrere Meßdurchläufe gemittelten Sitzbelegungsparameters berechnete Klassifizierung, und die Airbagsteuerung schaltet in einen für die Statur des jeweiligen Passagiers ungünstigeren Betriebsmodus.

Aufgabe der vorliegenden Erfindung ist es folglich, ein Auswerteverfahren für einen Sitzbelegungssensor eines Fahrzeugsitzes vorzuschlagen, das auch bei nicht optimaler Sitzbelegung eine wirksame Klassifizierung der Belegung des Fahrzeugsitzes ermöglicht.

Diese Aufgabe wird erfindungsgemäß gelöst durch ein Auswerteverfahren für einen Sitzbelegungssensor eines Fahrzeugsitzes zur Klassifizierung einer auf dem Fahrzeugsitz sitzenden Person oder eines auf dem Fahrzeugsitz aufliegenden Gegenstandes, wobei der Sitzbelegungssensor mehrere über die Fläche des Fahrzeugsitzes verteilte Sensorelemente aufweist, mit den folgenden Schritten:

a) individuelle Auswertung der einzelnen Sensorelemente, wobei für jedes Sensorelement ein Meßwert ermittelt wird, der für den momentanen Schaltzustand des jeweiligen Sensorelements kennzeichnend ist,

b) Berechnung eines momentanen Belegungsprofils anhand der ermittelten Meßwerte,

c) Vergleich der Güte des momentanen Belegungsprofils mit einer bestimmten Anzahl von in einem Pufferspeicher gespeicherten Gütekriterien vorheriger Belegungsprofilen,

d) Aufnahme des momentanen Belegungsprofils in einem Pufferspeicher falls die Güte des momentanen Belegungsprofils besser oder gleich der Güte der vorherigen Belegungsprofile ist, wobei das Belegungsprofil mit der geringsten Güte aus dem Pufferspeicher gelöscht wird,

e) Berechnung eines gemittelten Belegungsprofils anhand der in dem Pufferspeicher gespeicherten Parameter,

f) Klassifizierung der Sitzbelegung anhand des gemittelten Belegungsprofils.

Bei dem erfindungsgemäßen Verfahren werden die periodisch jeweils neu ermittelten Belegungsprofile nur dann zur Klassifizierung der Sitzbelegung herangezogen, wenn deren Güte besser oder gleich der Güte der vorhergehenden Belegungsprofile ist. Hierdurch wird eine einmal durchgeführte Klassifizierung auch dann nicht verschlechtert, wenn der Passagier vorübergehend eine für eine optimale Charakterisierung ungünstige Position einnimmt. Die Klassifizierung wird im Gegenteil mit fortlaufender Meßdauer ständig verbessert, so daß ein an die Statur des Passagiers optimal angepaßter Auslösemodus des Airbags gewählt werden kann.

Es ist anzumerken, daß in einer ersten Ausgestaltung, in der die Sensorelemente als einfache Schalterelemente ausgebildet sind, der an den einzelnen Sensorelementen ermittelte Meßwert lediglich eine Größe einnimmt, anhand derer zwischen einer Belegung und einer Nicht-Belegung des Sensorelementes unterschieden wird.

In einer bevorzugten Ausgestaltung des Verfahrens, bei der die Sensorelemente als druckabhängige Widerstände ausgebildet sind, umfaßt der Meßwert für den momentanen Schaltzustand den momentanen Widerstandswert des druckabhängigen Widerstandes.

Die Berechnung des momentanen Belegungsprofils umfaßt vorteilhaft die Berechnung eines Breiteparameters $P_B$, der ein Maß für die Breite der belegten Fläche darstellt. Diese Breite kann beispielsweise anhand statistischer Korrelationsfunktionen mit der Körpergröße und dem Gewicht des Passagiers in Verbindung gebracht werden.

Die Berechnung des Breiteparameters $P_B$ kann dazu nach der folgenden Formel erfolgen:

$$P_B = \frac{\left|\sum_{k=1}^{K/2}\sum_{i=1}^{I} V(i,k)\cdot p(i,k)\cdot c(k)\right|}{\left|\sum_{k=1}^{K/2}\sum_{i=1}^{I} V(i,k)\cdot c(k)\right|} + \frac{\left|\sum_{k=(K/2)+1}^{K}\sum_{i=1}^{I} V(i,k)\cdot p(i,k)\cdot c(k)\right|}{\left|\sum_{k=(K/2)+1}^{K}\sum_{i=1}^{I} V(i,k)\cdot c(k)\right|}$$

mit

I:      Zahl der Zeilen der Sensormatrix
K:     Zahl der Spalten der Sensormatrix
V(i,k)   der Meßwert des Sensorelementes in der i-ten Zeile und k-ten Spalte der Sensormatrix
p(i,k)   Position des jeweiligen Sensorelementes in der Sensormatrix
c(k)    einen Gewichtungskoeffizienten für die einzelnen Spalten der Sensormatrix

Dieser Faktor berechnet die Summe der Breiten der beiderseits der Mitte einer Sensormatrix belegten Flächen. Der Faktor p(i,k) ist hierbei von der Geometrie der Sensormatrix abhängig und berücksichtigt die räumliche Anordnung der einzelnen Sensorelemente zueinander. Der so errechnete Breitenparameter wird um so größer, je größer die Breite der belegten Fläche ist.

Die Berechnung des momentanen Belegungsprofils kann alternativ oder zusätzlich die Berechnung eines Parameters $P_G$ für die Gleichförmigkeit der Belegung umfassen. Mit einem solchen Parameter kann unterschieden werden, ob es sich bei dem Belegungsprofil um ein menschliches Sitzprofil handelt oder ob die Belegung des Fahrzeugsitzes durch einen Gegenstand erfolgt.

Die Berechnung des Parameters $P_G$ für die Gleichförmigkeit der Belegung kann dazu nach der folgenden Formel erfolgen:

$$P_G = \frac{(B+C)}{A*D}$$

wobei

$$A = \sum_{k=1}^{K} \sum_{i=1}^{I} V(i,k)$$

und für alle i, k, D $\in$ N

$$B = \sum_{k=1}^{K} \sum_{i=1}^{I} \left| V(i,k) - V(i+1,k) \right| \Rightarrow \text{IF} \quad V(i,k) \neq 0 \text{ and } V(i+1,k) \neq 0 \Rightarrow D = D+1$$

$$C = \sum_{k=1}^{K} \sum_{i=1}^{I} \left| V(i,k) - V(i,k+1) \right| \Rightarrow \text{IF} \quad V(i,k) \neq 0 \text{ and } V(i+1,k) \neq 0 \Rightarrow D = D+1$$

mit

I: Zahl der Zeilen der Sensormatrix
K: Zahl der Spalten der Sensormatrix
V(i,k) der Meßwert des Sensorelementes in der i-ten Zeile und k-ten Spalte der Sensormatrix

Dieser Parameter wird um so kleiner, je gleichmäßiger die Belegung der Sensormatrix erfolgt, d.h. je weniger sich der Schaltzustand von jeweils zwei benachbarter Sensorelemente unterscheidet. Dies bedingt, daß der Parameter um so kleiner wird, je gröber die belegte Fläche ist und je zusammenhängender sie ist.

Die Berechnung des momentanen Belegungsprofils kann alternativ oder zusätzlich die Berechnung des momentanen Belegungsprofils die Berechnung eines Objektparameters $P_K$ umfaßen. Dieser Parameter umfaßt die Information, daß das Belegungsprofil kein menschliches Profil ist und daß die Belegung nicht gleichmäßig erfolgt. Der Hintergrund hierbei ist, daß Objekte im allgemeinen ein Belegungsprofil aufweisen, das nur an den Seiten einen nennenswerten Anteil aufweist

Die Berechnung des Objektparameters $P_K$ kann beispielsweise nach der folgenden Formel erfolgen:

$$P_K = \frac{(A+B)}{S*C}$$

mit

$$S = \sum_{k=1}^{K} \sum_{i=1}^{I} V(i,k)$$

$$A = \sum_{i=1}^{I} \sum_{k=1}^{K/2} \sum_{j=k}^{K/2} V(i,k) - V(i,j+1) \quad \text{only if } V(i,k) > 0 \quad \text{(right side of the sensor)}$$

$$B = \sum_{i=1}^{I} \sum_{k=7}^{K} \sum_{j=6}^{k-1} V(i,k) - V(i,j) \quad \text{only if } V(i,k) > 0 \quad \text{(left side of the sensor)}$$

C= Zahl der ausgelösten Sensorelementen ($V(i, k) > 0$)

Die Klassifizierung der Sitzbelegung umfaßt vorteilhaft die Einteilung von Personen in verschiedene Gewichts- oder Größenkategorien, sowie zusätzlich oder alternativ die Unterscheidung zwischen einem Gegenstand und einer Person..

Eine Ausgestaltung der Erfindung ist in den beiliegenden Figuren dargestellt.
Es zeigen:

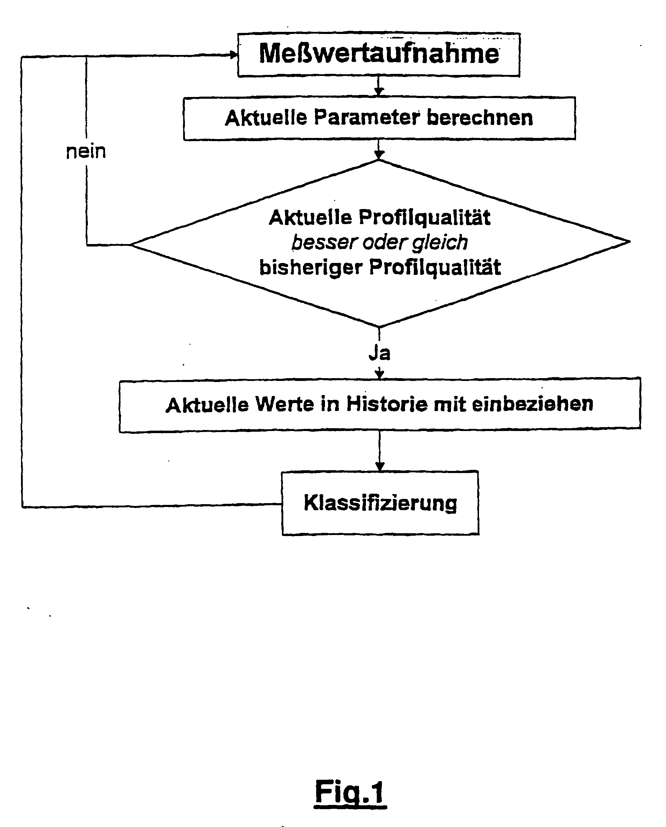

Fig.1: ein Flußdiagramm mit den einzelnen Schritten des Auswerteverfahrens

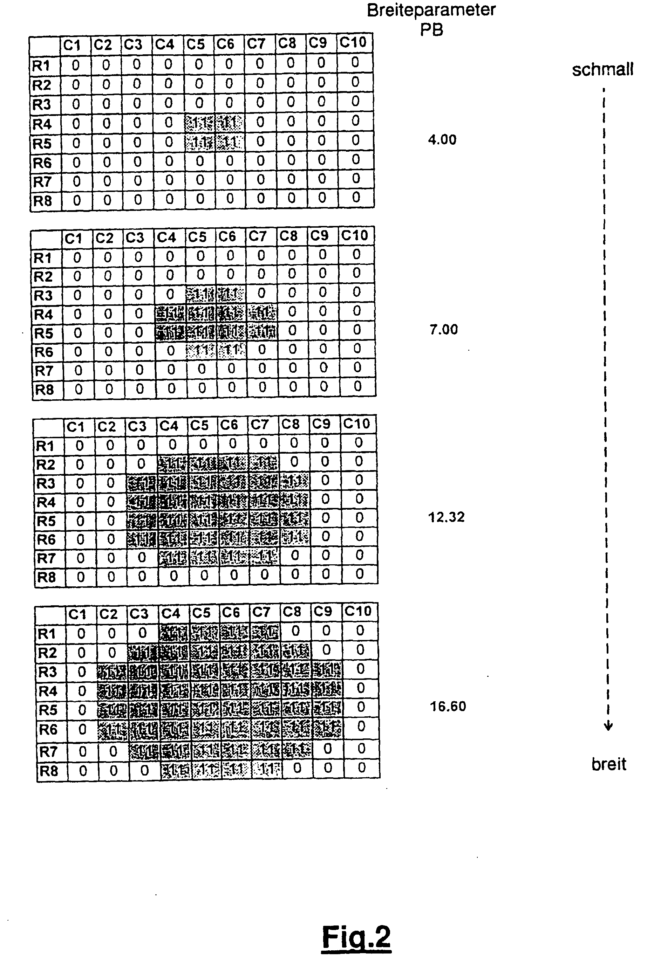

Fig.2: die Auswirkung unterschiedlicher Belegungsprofile auf den Breitenparameter, wobei die schematisch dargestellten Belegungsprofile mit einer (8x10)-Sensormatrix aufgenommen sind und alle Sensorelemente mit den gleichen Schaltzustand aufweisen (Meßwert 11)

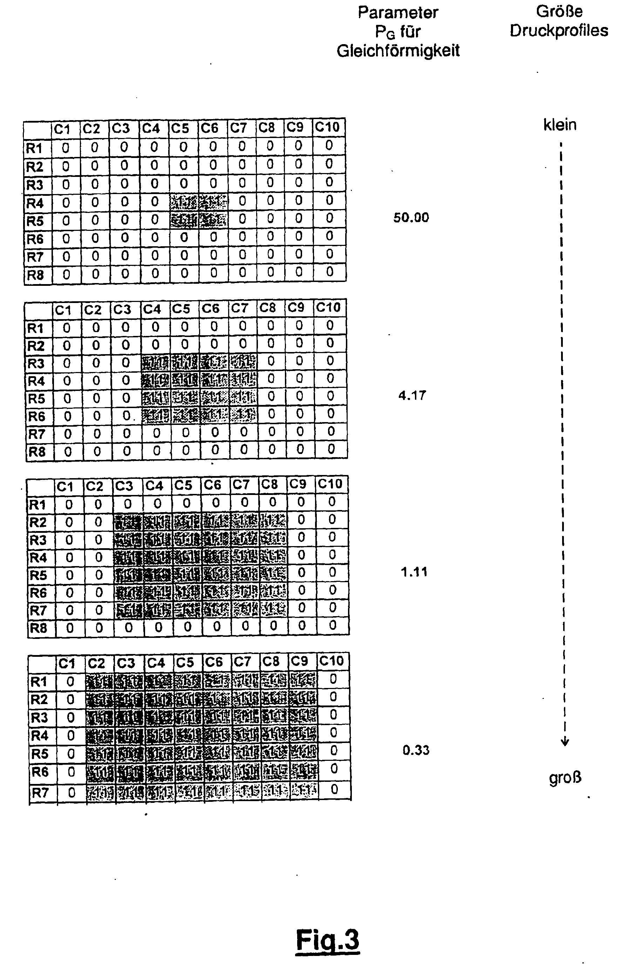

Fig.3: die Auswirkung unterschiedlicher großer Belegungsprofile auf den Paramater $P_G$ für die Gleichförmigkeit der Belegung.

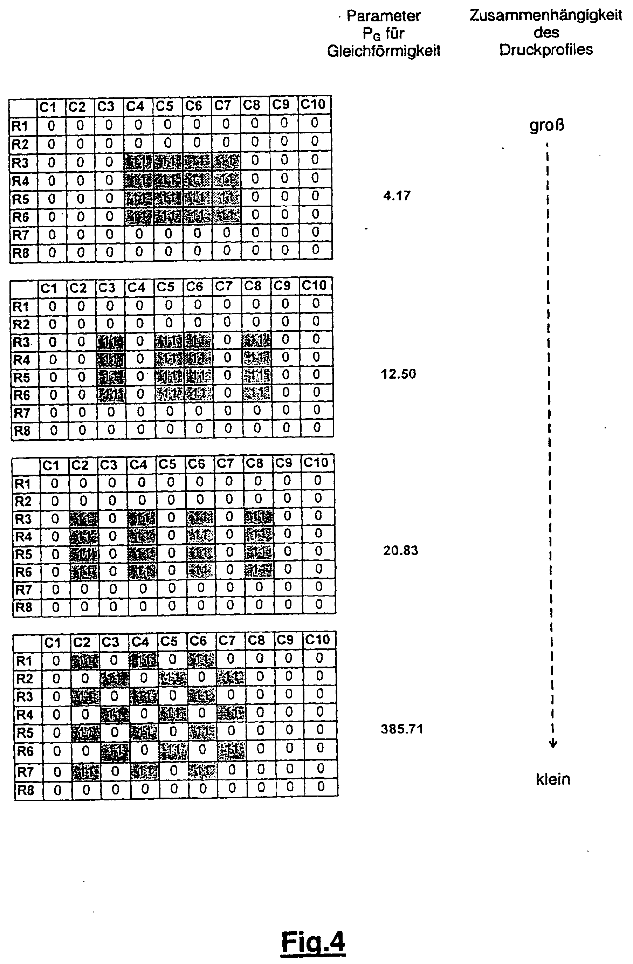

Fig.4: die Auswirkung unterschiedlich zusammenhängender Belegungsprofile auf den Paramater $P_G$ für die Gleichförmigkeit der Belegung,

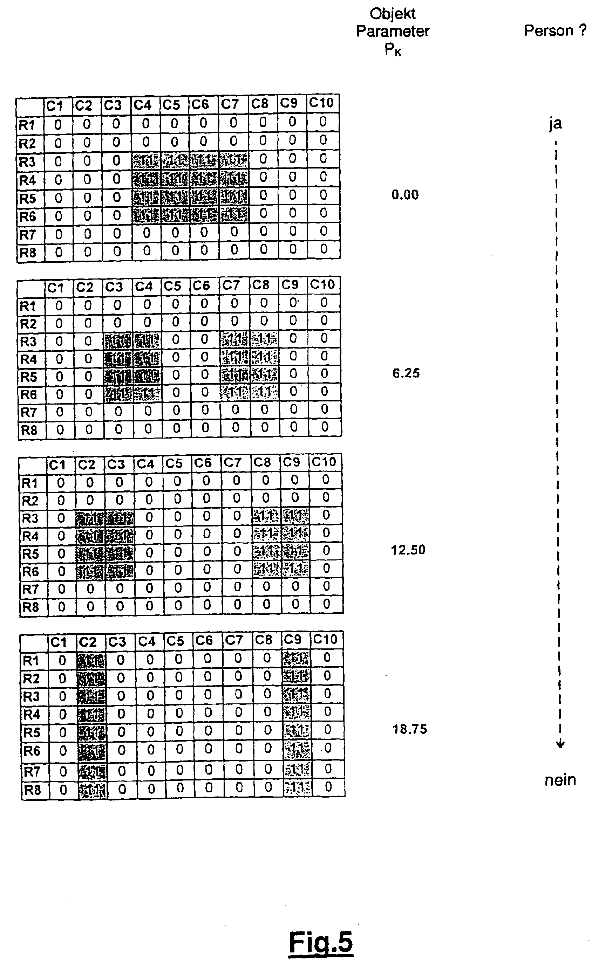

Fig.5: die Auswirkung unterschiedlicher Belegungsprofile auf den Objektparameter $P_K$

**Patentansprüche**

1. Auswerteverfahren für einen Sitzbelegungssensor eines Fahrzeugsitzes zur Klassifizierung einer auf dem Fahrzeugsitz sitzenden Person oder eines auf dem Fahrzeugsitz aufliegenden Gegenstandes, wobei der Sitzbelegungssensor mehrere über die Fläche des Fahrzeugsitzes verteilte Sensorelemente aufweist,
wobei die einzelnen Sensorelemente individuell ausgewertet werden, wobei für jedes Sensorelement ein Meßwert ermittelt wird, der für den momentanen Schaltzustand des jeweiligen Sensorelements kennzeichnend ist, und anhand der ermittelten Meßwerte ein momentanes Belegungsprofil berechnet wird,
**gekennzeichnet durch** folgende Schritte:

   a) Vergleich der Güte des momentanen Belegungsprofils mit einer bestimmten Anzahl von in einem Pufferspeicher gespeicherter Gütekriterien vorheriger Belegungsprofile,
   b) Aufnahme des momentanen Belegungsprofils in einem Pufferspeicher falls die Güte des momentanen Belegungsprofils besser oder gleich der Güte der vorherigen Belegungsprofile ist, wobei das Belegungsprofil mit der geringsten Güte aus dem Pufferspeicher gelöscht wird,
   c) Berechnung eines gemittelten Belegungsprofils anhand der in dem Pufferspeicher gespeicherten Parameter,
   d) Klassfizierung der Sitzbelegung anhand des gemittelten Belegungsprofils.

2. Auswerteverfahren nach Anspruch 1, wobei die Sensorelemente als druckabhängige Widerstände ausgebildet sind und wobei der Meßwert für den momentanen Schaltzustand den momentanen Widerstandswert des druckabhängigen Widerstandes umfaßt.

3. Auswerteverfahren nach Anspruch 1 oder 2, **dadurch gekennzeichnet, daß** die Berechnung des momentanen Belegungsprofils die Berechnung eines Breiteparameters $P_B$ umfaßt, der ein Maß für die Breite der belegten Fläche darstellt.

4. Auswerteverfahren nach Anspruch 3, **dadurch gekennzeichnet, daß** die Berechnung des Breiteparameters $P_B$ nach der folgenden Formel erfolgt:

$$P_B = \frac{\left|\sum_{k=1}^{K/2}\sum_{i=1}^{I} V(i,k)\cdot p(i,k)\cdot c(k)\right|}{\left|\sum_{k=1}^{K/2}\sum_{i=1}^{I} V(i,k)\cdot c(k)\right|} + \frac{\left|\sum_{k=(K/2)+1}^{K}\sum_{i=1}^{I} V(i,k)\cdot p(i,k)\cdot c(k)\right|}{\left|\sum_{k=(K/2)+1}^{K}\sum_{i=1}^{I} V(i,k)\cdot c(k)\right|}$$

mit

   I: Zahl der Zeilen der Sensormatrix
   K: Zahl der Spalten der Sensormatrix
   V(i,k) der Meßwert des Sensorelementes in der i-ten Zeile und k-ten Spalte der Sensormatrix
   p(i,k) Position des jeweiligen Sensorelementes in der Sensormatrix
   c(k) einen Gewichtungskoeffizienten für die einzelnen Spalten der Sensormatrix

5. Auswerteverfahren nach einem der vorherigen Ansprüche, **dadurch gekennzeichnet, daß** die Berechnung des momentanen Belegungsprofils die Berechnung eines Parameters $P_G$ für die Gleichförmigkeit der Belegung umfaßt.

6. Auswerteverfahren nach Anspruch 5, **dadurch gekennzeichnet, daß** die Berechnung des Parameters $P_G$ für die Gleichförmigkeit der Belegung nach der folgenden Formel erfolgt:

$$P_G = \frac{(B+C)}{A*D}$$

*wobei*

$$A = \sum_{k=1}^{K} \sum_{i=1}^{I} V(i,k)$$

und für alle i,k,D∈ N

$$B = \sum_{k=1}^{K} \sum_{i=1}^{I} |V(i,k) - V(i+1,k)| \Rightarrow \text{IF } V(i,k) \neq 0 \text{ and } V(i+1,k) \neq 0 \Rightarrow D = D$$

$$C = \sum_{k=1}^{K} \sum_{i=1}^{I} |V(i,k) - V(i,k+1)| \Rightarrow \text{IF } V(i,k) \neq 0 \text{ and } V(i+1,k) \neq 0 \Rightarrow D = D \cdot$$

mit

I: Zahl der Zeilen der Sensormatrix
K: Zahl der Spalten der Sensormatrix
V(i,k) der Meßwert des Sensorelementes in der i-ten Zeile und k-ten Spalte der Sensormatrix

7. Auswerteverfahren nach einem der vorherigen Ansprüche, **dadurch gekennzeichnet, daß** die Berechnung des momentanen Belegungsprofils die Berechnung eines Objektparameters $P_K$ umfaßt.

8. Auswerteverfahren nach Anspruch 7, **dadurch gekennzeichnet, daß** die Berechnung des Objektparameters $P_K$ nach der folgenden Formel erfolgt:

$$P_K = \frac{(A+B)}{S*C}$$

*mit*

$$S = \sum_{k=1}^{K} \sum_{i=1}^{I} V(i,k)$$

$$A = \sum_{i=1}^{I} \sum_{k=1}^{K/2} \sum_{j=k}^{K/2} V(i,k) - V(i,j+1) \text{ only if } V(i,k) > 0 \text{ (right side of the sensor)}$$

$$B = \sum_{i=1}^{I} \sum_{k=7}^{K} \sum_{j=6}^{k-1} V(i,k) - V(i,j) \text{ only if } V(i,k) > 0 \text{ (left side of the sensor)}$$

*C* = Zahl der ausgelösten Sensorelementen (*V(i, k)* > 0)

9. Auswerteverfahren nach einem der vorhergehenden Ansprüche, **dadurch gekennzeichnet, daß** die Klassifizierung der Sitzbelegung die Einteilung von Personen in verschiedene Gewichts- oder Größenkategorien umfaßt.

10. Auswerteverfahren nach einem der vorhergehenden Ansprüche, **dadurch gekennzeichnet, daß** die Klassifizierung der Sitzbelegung die Unterscheidung zwischen einem Gegenstand und einer Person umfaßt.

**Revendications**

**1.** Procédé d'évaluation pour un détecteur d'occupation de siège d'un siège de véhicule pour classifier une personne assise sur le siège du véhicule ou un objet posé sur le siège du véhicule, le détecteur d'occupation de siège comportant plusieurs éléments détecteurs répartis sur la surface du siège de véhicule,
les différents éléments détecteurs subissant une évaluation individuelle, une détermination d'une valeur de mesure étant opérée pour chaque élément détecteur, laquelle valeur est caractéristique pour l'état de commutation momentané de l'élément détecteur respectif, et le calcul d'un profil d'occupation momentané étant opéré à l'aide des valeurs de mesure déterminées,
**caractérisé par** les étapes suivantes:

a) comparaison de la qualité du profil d'occupation momentané avec un nombre déterminé de critères de qualité de profils d'occupation précédents, lesquels critères sont mis en mémoire dans une mémoire tampon;
b) enregistrement du profil d'occupation momentané dans une mémoire tampon si la qualité du profil d'occupation momentané est meilleure ou égale à la qualité des profils d'occupation précédents, le profil d'occupation ayant la qualité la plus faible étant effacé de la mémoire tampon;
c) calcul d'un profil d'occupation, établi par calcul de la moyenne, à l'aide des paramètres mis en mémoire dans la mémoire tampon;
d) classification de l'occupation du siège à l'aide du profil d'occupation établi par calcul de la moyenne.

**2.** Procédé d'évaluation selon la revendication 1, les éléments détecteurs étant réalisés en tant que résistances dépendantes de la pression, la valeur de mesure de l'état de commutation momentané comprenant la valeur de résistance momentanée de la résistance dépendante de la pression.

**3.** Procédé d'évaluation selon la revendication 1 ou 2, **caractérisé en ce que** le calcul du profil d'occupation momentané comprend le calcul d'un paramètre de largeur $P_B$ qui représente une mesure de la largeur de la surface occupée.

**4.** Procédé d'évaluation selon la revendication 3, **caractérisé en ce que** le calcul du paramètre de largeur $P_B$ est effectué selon la formule suivante:

$$P_B = \frac{\left|\sum_{k=1}^{K/2}\sum_{i=1}^{I} V(i,k) \cdot p(i,k) \cdot c(k)\right|}{\left|\sum_{k=1}^{K/2}\sum_{i=1}^{I} V(i,k) \cdot c(k)\right|} + \frac{\left|\sum_{k=(K/2)+1}^{K}\sum_{i=1}^{I} V(i,k) \cdot p(i,k) \cdot c(k)\right|}{\left|\sum_{k=(K/2)+1}^{K}\sum_{i=1}^{I} V(i,k) \cdot c(k)\right|}$$

I étant le nombre des lignes de la matrice de détecteur,
K étant le nombre des colonnes de la matrice de détecteur,
V(i,k) étant la valeur de mesure de l'élément détecteur dans la i$^{ème}$ ligne et la k$^{ième}$ colonne de la matrice de détecteur,
p(i,k) étant la position de l'élément détecteur respectif dans la matrice de détecteur,
c(k) étant un coefficient de pondération pour les différentes colonnes de la matrice de détecteur.

**5.** Procédé d'évaluation selon l'une des revendications précédentes, **caractérisé en ce que** le calcul du profil d'occupation momentané comprend le calcul d'un paramètre $P_G$ de l'homogénéité de l'occupation.

**6.** Procédé d'évaluation selon la revendication 5, **caractérisé en ce que** le calcul du paramètre $P_G$ de l'homogénéité de l'occupation est effectué selon la formule suivante :

$$P_G = \frac{(B+C)}{A * D} .$$

étant entendu que

$$A = \sum_{k=1}^{K} \sum_{i=1}^{I} V(i,k)$$

et pour tous les i, k, D ∈ N

$$B = \sum_{k=1}^{K} \sum_{i=1}^{I} |V(i,k) - V(i+1,k)| \Rightarrow IF \quad V(i,k) \neq 0 \quad and \quad V(i+1,k) \neq 0 \Rightarrow D = D + 1$$

$$C = \sum_{k=1}^{K} \sum_{i=1}^{I} |V(i,k) - V(i+1,k)| \Rightarrow IF \quad V(i,k) \neq 0 \quad and \quad V(i+1,k) \neq 0 \Rightarrow D = D + 1$$

I étant le nombre des lignes de la matrice de détecteur,
K étant le nombre des colonnes de la matrice de détecteur,
V(i,k) étant la valeur de mesure de l'élément détecteur dans la $i^{\text{ème}}$ ligne et la $k^{\text{ème}}$ colonne de la matrice de détecteur.

7. Procédé d'évaluation selon l'une des revendications précédentes, **caractérisé en ce que** le calcul du profil d'occupation momentané comprend le calcul d'un paramètre d'objet $P_K$.

8. Procédé d'évaluation selon la revendication 7, **caractérisé en ce que** le calcul du paramètre d'objet $P_K$ est effectué selon la formule suivante:

$$P_K = \frac{(A + B)}{S * C}$$

avec

$$S = \sum_{k=1}^{K} \sum_{i=1}^{I} V(i,k)$$

$$A = \sum_{i=1}^{I} \sum_{k=1}^{K/2} \sum_{j=k}^{K/2} V(i,k) - V(i,j+1) \quad only \quad if \quad V(i,k) > 0 \quad (right \ side \ of \ the \ sensor)$$

$$B = \sum_{i=1}^{I} \sum_{k=7}^{K} \sum_{j=6}^{k-1} V(i,k) - V(i,j) \quad only \quad if \quad V(i,k) > 0 \quad (left \ side \ of \ the \ sensor)$$

C = nombre des éléments détecteurs déclenchés $(V(i, k) > 0)$

9. Procédé d'évaluation selon l'une des revendications précédentes, **caractérisé en ce que** la classification de l'occupation de siège comprend la répartition de personnes en différentes catégories de poids ou de taille.

10. Procédé d'évaluation selon l'une des revendications précédentes, **caractérisé en ce que** la classification, de l'occupation de siège comprend la distinction entre un objet et une personne.

**Claims**

1. Evaluation method for a seat occupancy sensor of a vehicle seat to classify a person sitting on the vehicle seat or an object lying on the vehicle seat, in which the seat occupancy sensor has a plurality of sensor elements distributed over the surface of the vehicle seat,

in which the sensor elements are evaluated individually, a measurement value being determined for each sensor element which is characteristic of the momentary switching status of that sensor element, and a momentary occupancy profile being calculated by means of the measurement values determined, **characterized by** the following steps:

a) comparison of the quality of the momentary occupancy profile with a certain number of quality criteria of previous occupancy profiles stored in a buffer memory,
b) recording of the momentary occupancy profile in a buffer memory if the quality of the momentary occupancy profile is better than or as good as the quality of the previous occupancy profiles, the occupancy profile with the lowest quality being deleted from the memory,
c) calculation of an averaged occupancy profile by means of the parameters stored in the buffer memory,
d) classification of seat occupancy in accordance with the occupancy profile determined.

2. Evaluation method according to Claim 1, in which the sensor elements have the form of pressure-sensitive resistors and the measurement value for the momentary switching status includes the momentary resistance value of the pressure-sensitive resistor.

3. Evaluation method according to Claim 1 or 2, **characterized in that** calculation of the momentary occupancy profile includes calculation of a width parameter $P_B$, which represents a measurement of the width of the surface occupied.

4. Evaluation method according to Claim 3, **characterized in that** calculation of the width parameter $P_B$ is performed according to the following formula:

$$P_B = \frac{\left| \sum_{k=1}^{K/2} \sum_{i=1}^{I} V(i,k) \cdot p(i,k) \cdot c(k) \right|}{\left| \sum_{k=1}^{K/2} \sum_{i=1}^{I} V(i,k) \cdot c(k) \right|} + \frac{\left| \sum_{k=(K/2)+1}^{K} \sum_{i=1}^{I} V(i,k) \cdot p(i,k) \cdot c(k) \right|}{\left| \sum_{k=(K/2)+1}^{K} \sum_{i=1}^{I} V(i,k) \cdot c(k) \right|}$$

with:

I: number of rows in the sensor matrix
K: number of columns in the sensor matrix
V(i, k) measurement value of the sensor element in row *i* and column *k* of the sensor matrix
p(i, k) position of this sensor element in the sensor matrix
c(k) a weighting coefficient for the individual columns of the sensor matrix

5. Evaluation method according to any one of the above Claims, **characterized in that** calculation of the momentary occupancy profile comprises calculation of a parameter $P_G$ for uniformity of occupancy.

6. Evaluation method according to Claim 5, **characterized in that** calculation of parameter $P_G$ for uniformity of occupancy is performed according to the following formula:

$$P_G = \frac{(B+C)}{A * D}$$

where

$$A = \sum_{k=1}^{K} \sum_{i=1}^{I} V(i,k)$$

and for all i, k, D, $\in$ N

$$B = \sum_{k=1}^{K} \sum_{i=1}^{I} \left| V(i,k) - V(i+1,k) \right| \Rightarrow \text{IF } V(i,k) \neq 0 \text{ and } V(i+1,k) \neq 0 \Rightarrow D = D+1$$

$$C = \sum_{k=1}^{K} \sum_{i=1}^{I} \left| V(i,k) - V(i,k+1) \right| \Rightarrow \text{IF } V(i,k) \neq 0 \text{ and } V(i+1,k) \neq 0 \Rightarrow D = D+1$$

with:

I: number of rows in the sensor matrix
K: number of columns in the sensor matrix
V(i, k) measurement value of the sensor element in row $i$ and column k of the sensor matrix.

7. Evaluation method according to any one of the above Claims, **characterized in that** calculation of the momentary occupancy profile comprises calculation of an object parameter $P_K$.

8. Evaluation method according to Claim 7, **characterized in that** calculation of the object parameter $P_K$ is performed according to the following formula:

$$P_K = \frac{(A+B)}{S*C}$$

where:

$$S = \sum_{k=1}^{K} \sum_{i=1}^{I} V(i,k)$$

$$A = \sum_{i=1}^{I} \sum_{k=1}^{K/2} \sum_{j=k}^{K/2} V(i,k) - V(i,j+1) \quad \text{only if } V(i,k) > 0 \text{ (right side of the sensor)}$$

$$B = \sum_{i=1}^{I} \sum_{k=7}^{K} \sum_{j=6}^{k-1} V(i,k) - V(i,j) \quad \text{only if } V(i,k) > 0 \text{ (left side of the sensor)}$$

$C$ = number of sensor elements actuated (V(i,k)>0)

9. Evaluation method according to any one of the above Claims, **characterized in that** the classification of seat occupancy comprises the division of persons into a variety of categories of weight or size.

10. Evaluation method according to any one of the above Claims, **characterized in that** classification of seat occupancy comprises the distinction between an object and a person.

```
                    ┌─────────────────────────┐
              ┌────→│   Meßwertaufnahme       │
              │     └────────────┬────────────┘
              │                  │
              │     ┌────────────▼────────────┐
              │     │ Aktuelle Parameter berechnen │
              │     └────────────┬────────────┘
              │                  │
   nein       │                ◇ ▼ ◇
              │         ╱                 ╲
              │        ╱   Aktuelle Profilqualität ╲
              └───────◇     besser oder gleich      ◇
                       ╲   bisheriger Profilqualität ╱
                        ╲                           ╱
                         ◇           ▼           ◇
                                    Ja
                                     │
              ┌──────────────────────▼──────────────────────┐
              │  Aktuelle Werte in Historie mit einbeziehen  │
              └──────────────────────┬──────────────────────┘
                                     │
              ┌──────────────────────▼────────┐
         └───→│      Klassifizierung          │
              └───────────────────────────────┘
```

# Fig.1

11

Breiteparameter
PB

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | 0  | 0  | 0  | 0  | 0  | 0  | 0  | 0   |
| R4 | 0  | 0  | 0  | 0  | ▓  | ▓  | 0  | 0  | 0  | 0   |
| R5 | 0  | 0  | 0  | 0  | ▓  | ▓  | 0  | 0  | 0  | 0   |
| R6 | 0  | 0  | 0  | 0  | 0  | 0  | 0  | 0  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

4.00

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | 0  | 0  | ▓  | ▓  | 0  | 0  | 0  | 0   |
| R4 | 0  | 0  | 0  | ▓  | ▓  | ▓  | ▓  | 0  | 0  | 0   |
| R5 | 0  | 0  | 0  | ▓  | ▓  | ▓  | ▓  | 0  | 0  | 0   |
| R6 | 0  | 0  | 0  | 0  | ▓  | ▓  | 0  | 0  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

7.00

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | ▓  | ▓  | ▓  | ▓  | 0  | 0  | 0   |
| R3 | 0  | 0  | ▓  | ▓  | ▓  | ▓  | ▓  | ▓  | 0  | 0   |
| R4 | 0  | 0  | ▓  | ▓  | ▓  | ▓  | ▓  | ▓  | 0  | 0   |
| R5 | 0  | 0  | ▓  | ▓  | ▓  | ▓  | ▓  | ▓  | 0  | 0   |
| R6 | 0  | 0  | ▓  | ▓  | ▓  | ▓  | ▓  | ▓  | 0  | 0   |
| R7 | 0  | 0  | 0  | ▓  | ▓  | ▓  | ▓  | 0  | 0  | 0   |
| R8 | 0  | 0  | 0  | 0  | 0  | 0  | 0  | 0  | 0  | 0   |

12.32

|    | C1 | C2 | C3 | C4 | C5 | C6 | C7 | C8 | C9 | C10 |
|----|----|----|----|----|----|----|----|----|----|-----|
| R1 | 0  | 0  | 0  | ▓  | ▓  | ▓  | ▓  | 0  | 0  | 0   |
| R2 | 0  | 0  | ▓  | ▓  | ▓  | ▓  | ▓  | ▓  | 0  | 0   |
| R3 | 0  | ▓  | ▓  | ▓  | ▓  | ▓  | ▓  | ▓  | ▓  | 0   |
| R4 | 0  | ▓  | ▓  | ▓  | ▓  | ▓  | ▓  | ▓  | ▓  | 0   |
| R5 | 0  | ▓  | ▓  | ▓  | ▓  | ▓  | ▓  | ▓  | ▓  | 0   |
| R6 | 0  | ▓  | ▓  | ▓  | ▓  | ▓  | ▓  | ▓  | ▓  | 0   |
| R7 | 0  | 0  | ▓  | ▓  | ▓  | ▓  | ▓  | ▓  | 0  | 0   |
| R8 | 0  | 0  | 0  | ▓  | ▓  | ▓  | ▓  | 0  | 0  | 0   |

16.60

schmall
↓
breit

**Fig.2**

Parameter
P$_G$ für
Gleichförmigkeit

Größe
Druckprofiles

klein

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | 0  | 0  | 0  | 0  | 0  | 0  | 0  | 0   |
| R4 | 0  | 0  | 0  | 0  |    |    | 0  | 0  | 0  | 0   |
| R5 | 0  | 0  | 0  | 0  |    |    | 0  | 0  | 0  | 0   |
| R6 | 0  | 0  | 0  | 0  | 0  | 0  | 0  | 0  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

50.00

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | 0  |    |    |    |    | 0  | 0  | 0   |
| R4 | 0  | 0  | 0  |    |    |    |    | 0  | 0  | 0   |
| R5 | 0  | 0  | 0  |    |    |    |    | 0  | 0  | 0   |
| R6 | 0  | 0  | 0. |    |    |    |    | 0  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

4.17

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  |    |    |    |    |    |    | 0  | 0   |
| R3 | 0  | 0  |    |    |    |    |    |    | 0  | 0   |
| R4 | 0  | 0  |    |    |    |    |    |    | 0  | 0   |
| R5 | 0  | 0  |    |    |    |    |    |    | 0  | 0   |
| R6 | 0  | 0  |    |    |    |    |    |    | 0  | 0   |
| R7 | 0  | 0  |    |    |    |    |    |    | 0  | 0   |
| R8 | 0  | 0  | 0  | 0  | 0  | 0  | 0  | 0  | 0  | 0   |

1.11

|    | C1 | C2 | C3 | C4 | C5 | C6 | C7 | C8 | C9 | C10 |
|----|----|----|----|----|----|----|----|----|----|-----|
| R1 | 0  |    |    |    |    |    |    |    |    | 0   |
| R2 | 0  |    |    |    |    |    |    |    |    | 0   |
| R3 | 0  |    |    |    |    |    |    |    |    | 0   |
| R4 | 0  |    |    |    |    |    |    |    |    | 0   |
| R5 | 0  |    |    |    |    |    |    |    |    | 0   |
| R6 | 0  |    |    |    |    |    |    |    |    | 0   |
| R7 | 0  |    |    |    |    |    |    |    |    | 0   |

0.33

groß

# Fig.3

Parameter $P_G$ für Gleichförmigkeit

Zusammenhängigkeit des Druckprofiles

groß

|    | C1 | C2 | C3 | C4 | C5 | C6 | C7 | C8 | C9 | C10 |
|----|----|----|----|----|----|----|----|----|----|-----|
| R1 | 0 | 0 | 0 | 0 | 0 | 0 | 0 | 0 | 0 | 0 |
| R2 | 0 | 0 | 0 | 0 | 0 | 0 | 0 | 0 | 0 | 0 |
| R3 | 0 | 0 | 0 | ▨ | ▨ | ▨ | ▨ | 0 | 0 | 0 |
| R4 | 0 | 0 | 0 | ▨ | ▨ | ▨ | ▨ | 0 | 0 | 0 |
| R5 | 0 | 0 | 0 | ▨ | ▨ | ▨ | ▨ | 0 | 0 | 0 |
| R6 | 0 | 0 | 0 | ▨ | ▨ | ▨ | ▨ | 0 | 0 | 0 |
| R7 | 0 | 0 | 0 | 0 | 0 | 0 | 0 | 0 | 0 | 0 |
| R8 | 0 | 0 | 0 | 0 | 0 | 0 | 0 | 0 | 0 | 0 |

4.17

|    | C1 | C2 | C3 | C4 | C5 | C6 | C7 | C8 | C9 | C10 |
|----|----|----|----|----|----|----|----|----|----|-----|
| R1 | 0 | 0 | 0 | 0 | 0 | 0 | 0 | 0 | 0 | 0 |
| R2 | 0 | 0 | 0 | 0 | 0 | 0 | 0 | 0 | 0 | 0 |
| R3 | 0 | 0 | ▨ | 0 | ▨ | ▨ | 0 | ▨ | 0 | 0 |
| R4 | 0 | 0 | ▨ | 0 | ▨ | ▨ | 0 | ▨ | 0 | 0 |
| R5 | 0 | 0 | ▨ | 0 | ▨ | ▨ | 0 | ▨ | 0 | 0 |
| R6 | 0 | 0 | ▨ | 0 | ▨ | ▨ | 0 | ▨ | 0 | 0 |
| R7 | 0 | 0 | 0 | 0 | 0 | 0 | 0 | 0 | 0 | 0 |
| R8 | 0 | 0 | 0 | 0 | 0 | 0 | 0 | 0 | 0 | 0 |

12.50

|    | C1 | C2 | C3 | C4 | C5 | C6 | C7 | C8 | C9 | C10 |
|----|----|----|----|----|----|----|----|----|----|-----|
| R1 | 0 | 0 | 0 | 0 | 0 | 0 | 0 | 0 | 0 | 0 |
| R2 | 0 | 0 | 0 | 0 | 0 | 0 | 0 | 0 | 0 | 0 |
| R3 | 0 | ▨ | 0 | ▨ | 0 | ▨ | 0 | ▨ | 0 | 0 |
| R4 | 0 | ▨ | 0 | ▨ | 0 | ▨ | 0 | ▨ | 0 | 0 |
| R5 | 0 | ▨ | 0 | ▨ | 0 | ▨ | 0 | ▨ | 0 | 0 |
| R6 | 0 | ▨ | 0 | ▨ | 0 | ▨ | 0 | ▨ | 0 | 0 |
| R7 | 0 | 0 | 0 | 0 | 0 | 0 | 0 | 0 | 0 | 0 |
| R8 | 0 | 0 | 0 | 0 | 0 | 0 | 0 | 0 | 0 | 0 |

20.83

|    | C1 | C2 | C3 | C4 | C5 | C6 | C7 | C8 | C9 | C10 |
|----|----|----|----|----|----|----|----|----|----|-----|
| R1 | 0 | ▨ | 0 | ▨ | 0 | ▨ | 0 | 0 | 0 | 0 |
| R2 | 0 | 0 | ▨ | 0 | ▨ | 0 | ▨ | 0 | 0 | 0 |
| R3 | 0 | ▨ | 0 | ▨ | 0 | ▨ | 0 | 0 | 0 | 0 |
| R4 | 0 | 0 | ▨ | 0 | ▨ | 0 | ▨ | 0 | 0 | 0 |
| R5 | 0 | ▨ | 0 | ▨ | 0 | ▨ | 0 | 0 | 0 | 0 |
| R6 | 0 | 0 | ▨ | 0 | ▨ | 0 | ▨ | 0 | 0 | 0 |
| R7 | 0 | ▨ | 0 | ▨ | 0 | ▨ | 0 | 0 | 0 | 0 |
| R8 | 0 | 0 | 0 | 0 | 0 | 0 | 0 | 0 | 0 | 0 |

385.71

klein

## Fig.4

Objekt
Parameter
$P_K$

Person ?

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | 0  | ▒  | ▒  | ▒  | ▒  | 0  | 0  | 0   |
| R4 | 0  | 0  | 0  | ▒  | ▒  | ▒  | ▒  | 0  | 0  | 0   |
| R5 | 0  | 0  | 0  | ▒  | ▒  | ▒  | ▒  | 0  | 0  | 0   |
| R6 | 0  | 0  | 0  | ▒  | ▒  | ▒  | ▒  | 0  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

ja

0.00

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | 0  | ▒  | ▒  | 0  | 0  | ▒  | ▒  | 0  | 0   |
| R4 | 0  | 0  | ▒  | ▒  | 0  | 0  | ▒  | ▒  | 0  | 0   |
| R5 | 0  | 0  | ▒  | ▒  | 0  | 0  | ▒  | ▒  | 0  | 0   |
| R6 | 0  | 0  | ▒  | ▒  | 0  | 0  | ▒  | ▒  | 0  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

6.25

|    | C1 | C2 | C3 | C4 | C5 | C6 | C7 | C8 | C9 | C10 |
|----|----|----|----|----|----|----|----|----|----|-----|
| R1 | 0  | 0  | 0  | 0  | 0  | 0  | 0  | 0  | 0  | 0   |
| R2 | 0  | 0  | 0  | 0  | 0  | 0  | 0  | 0  | 0  | 0   |
| R3 | 0  | ▒  | ▒  | 0  | 0  | 0  | 0  | ▒  | ▒  | 0   |
| R4 | 0  | ▒  | ▒  | 0  | 0  | 0  | 0  | ▒  | ▒  | 0   |
| R5 | 0  | ▒  | ▒  | 0  | 0  | 0  | 0  | ▒  | ▒  | 0   |
| R6 | 0  | ▒  | ▒  | 0  | 0  | 0  | 0  | ▒  | ▒  | 0   |
| R7 | 0  | 0  | 0  | 0  | 0  | 0  | 0  | 0  | 0  | 0   |
| R8 | 0  | 0  | 0  | 0  | 0  | 0  | 0  | 0  | 0  | 0   |

12.50

|    | C1 | C2 | C3 | C4 | C5 | C6 | C7 | C8 | C9 | C10 |
|----|----|----|----|----|----|----|----|----|----|-----|
| R1 | 0  | ▒  | 0  | 0  | 0  | 0  | 0  | 0  | ▒  | 0   |
| R2 | 0  | ▒  | 0  | 0  | 0  | 0  | 0  | 0  | ▒  | 0   |
| R3 | 0  | ▒  | 0  | 0  | 0  | 0  | 0  | 0  | ▒  | 0   |
| R4 | 0  | ▒  | 0  | 0  | 0  | 0  | 0  | 0  | ▒  | 0   |
| R5 | 0  | ▒  | 0  | 0  | 0  | 0  | 0  | 0  | ▒  | 0   |
| R6 | 0  | ▒  | 0  | 0  | 0  | 0  | 0  | 0  | ▒  | 0   |
| R7 | 0  | ▒  | 0  | 0  | 0  | 0  | 0  | 0  | ▒  | 0   |
| R8 | 0  | ▒  | 0  | 0  | 0  | 0  | 0  | 0  | ▒  | 0   |

18.75

nein

## Fig.5